# EUROPÄISCHE PATENTANMELDUNG

(11) **EP 2 597 723 A1**
(43) Veröffentlichungstag der Anmeldung: **29.05.2013**
(21) Anmeldenummer: 11009386.1
(22) Anmeldetag: 26.11.2011
(51) Int. Cl.: H01Q 1/22, A44C 5/00, G06K 19/00, G06K 19/04

(54) **Schmuckgegenstand**

(71) Anmelder: Eduard G.Fidel GmbH, 75179 Pforzheim (DE)
(72) Erfinder: Barth, Hans-Peter, 73655 Plüderhausen (DE)
(74) Vertreter: Wacker, Jost Oliver

(57) **Zusammenfassung**

Ein Schmuckgegenstand (2) weist einen Metallgrundkörper (4) auf, an dem Anlege-/Befestigungsmittel (6) vorgesehen sind und an dem ein RFID-Transponder (10) gehalten ist. Der RFID-Transponder weist einen Speicherchip (18), in dem auslesbare Daten hinterlegt sind, und eine Antenne (14) auf, über die Signale (SK; SL) mit einem Lesegerät (28) austauschhbar sind. Dabei ist vorgesehen, dass der RFID-Transponder (10) nach außen hin wenigstens teilweise von einem am Metallgrundkörper (4) angeordneten, amorphen Zierelement (8) abgedeckt ist.

## Beschreibung

Die Erfindung betrifft einen als Identifikationsmittel verwendbaren Schmuckgegenstand, wie insbesondere einen Fingerring, eine Schmuckkette einen Armreif, einen Manschettenknopf oder eine Krawattennadel nach dem Oberbegriff des Anspruchs 1 sowie ein Identifikationssystem mit einem derartigen Schmuckgegenstand und einem Lesegerät. Der Schmuckgegenstand weist einen Metallgrundkörper auf, an dem Anlege-/Befestigungsmittel zum Anlegen an einen zu schmückenden Körperteil beziehungsweise zur Festlegung an einem Kleidungsstück vorgesehen sind, wie beispielsweise eine Finger- oder Handgelenksaufnahme, ein Kettenverschluss beziehungsweise ein Manschettenverschluss, eine Spange oder eine Nadel. Zudem ist an dem Metallgrundkörper ein radiofrequency identification (RFID)-Transponder gehalten, der einen Speicherchip aufweist, in dem auslesbare Daten, wie insbesondere ein Identifikationscode, hinterlegt sind. Zudem weist der RFID-Transponder eine Antenne auf, über die Signale mit einem Lesegerät austauschbar sind beziehungsweise über die die Energieversorgung erfolgen kann.

Aus DE 10 2007 025 920 A1 ist ein Schmuckgegenstand, beispielsweise in Form eines Anhängers bekannt, der mit einem RFID-Transponder versehen ist. Dieser weist einen Datenspeicher auf, der in Abhängigkeit einer Position eines mehrteiligen Gehäuses ausgelesen oder beschriftet werden kann. Der RFID-Transponder ist hierzu in einem Innengehäuse aus Kunststoff aufgenommen, das für hochfrequente elektromagnetische Felder durchlässig ist. Dieses ist wiederum in einem zweiteiligen Außengehäuse aufgenommen, das für hochfrequente elektromagnetische Speisefeldert teilweise stark dämpfend und teilweise durchlässig ist. Je nachdem in welchem Teil des Außengehäuses das Innengehäuse angeordnet wird ist dadurch ein Auslesen des Datenspeichers möglich oder nicht.

Der bekannte Schmuckgegenstand weist somit in allen Ausführungsformen einen Verstellmechanismus auf, durch den die Auslesbarkeit des Datenspeichers erlaubt oder blockiert werden kann. Hierdurch ist einerseits die Herstellung des Schmuckgegenstandes relativ aufwändig. Andererseits weisen die Verstellmechanismen keine lange Lebenserwartung auf, so dass auch der Schmuckgegenstand insgesamt keine dauerhafte Hochwertigkeit vermitteln kann, was im Publikumsverkehr häufig auf wenig Akzeptanz stößt.

Zudem gibt es viele Anwendungsmöglichkeiten derartiger als Identifikationsmittel fungierender Schmuckgegenstände, bei denen eine dauerhafte beziehungsweise eine hinsichtlich des Auslesezeitpunktes für den Träger unbewusste zur Verfügungstellung der Identifikationsdaten von Vorteil ist. Für derartige Anwendungen sind die bekannten Schmuckgegenstände nur bedingt geeignet, da es wegen der einstellbaren Ausleseblockierung häufig zu Fehlfunktionen kommen kann.

Die Aufgabe der Erfindung ist es nun, bei einem gattungsgemäßen Schmuckgegenstand die genannten Nachteile zu vermeiden und eine dauerhaft ungestörte Auslesung der gespeicherten Identifikationsdaten zu ermöglichen und gleichzeitig eine langlebige Hochwertigkeit zu vermitteln.

Diese Aufgabe wird durch einen Schmuckgegenstand mit den Merkmalen des Anspruchs 1 gelöst. Dabei ist der RFID-Transponder nach außen hin wenigstens teilweise von einem an einer Oberfläche des Metallgrundkörpers angeordneten beziehungsweise in diesen eingelassenen, amorphen Zierelement abgedeckt. Auf diese Weise ist es möglich, den RFID-Transponder zumindest im Wesentlichen uneinsehbar an dem Metallgrundkörper anzuordnen, während der RFID-Transponder auch in dem durch das amorphe Zierelement abgedeckten Bereich für den Datenaustausch mit einem Lesegerät beziehungsweise für hochfrequente elektromagnetische Speisefelder der betreffenden Lesegeräte nahezu dämpfungsfrei durchlässig ist. Hierdurch kann gewährleistet werden, dass der Speicherchip des RFID-Transponders jederzeit und ohne das Zutun des Trägers des Schmuckgegenstandes von einem für das Auslesen des RFID-Transponders vorbestimmten Lesegerät ausgelesen werden kann. Auf diese Weise kann der Schmuckgegenstand als Identifikationsmittel genutzt werden, das bei Annäherung der tragenden Person an ein Sicherheitssystem, das beispielsweise an einem Computerarbeitsplatz oder einer Schließanlage eines Gebäudes oder eines Fahrzeuges vorgesehen ist, ein Identifikationssignal abgibt beziehungsweise einen Identifikationscode auslesbar zur Verfügung stellt. Auf Basis dieses Identifikationscodes kann dann das Sicherheitssystem aktiviert werden, wobei dieses beispielsweise eine Tür oder ein Tor öffnet oder einen Computer zumindest bereichsweise frei schaltet. Dabei kann der Transponder mit Hilfe des abdeckenden Zierelementes unauffällig in den Schmuckgegenstand integriert werden, wobei dieser durch das Zierelement eine zusätzliche Hochwertigkeit vermittelt.

In einer besonders vorteilhaften Ausführungsform ist das amorphe Zierelement dabei durch einen amorphen Zierstein oder eine Ziersteinnachbildung aus einem amorphen Material gebildet. Durch ein derartiges Zierelement, das beispielsweise die Form eines geschliffenen Edelsteins oder eines natürlichen Steins aufweisen kann, kann ein besonders hochwertiger Gesamteindruck des Schmuckgegenstandes erzeugt werden.

Zudem ist es günstig, wenn in das Zierelement ein zum Metallgrundkörper hin geöffneter Aufnahmeraum eingelassen ist. Hierdurch können auch über die Kontur des Metallgrundkörpers hinausragende Teile des RFID-Transponders nach außen hin vollständig abgedeckt werden. Zudem ist auf diese Weise eine besonders einfache und stabile Festlegung des RFID-Transponders am Schmuckgegenstand möglich.

Ferner ist es dabei von Vorteil, wenn die Antenne des RFID-Transponders über eine Kontur des Metallgrundkörpers hinaus ragt. Hierdurch wird eine geringere Abschirmung des RFID-Transponders durch den Metallgrundkörper und dadurch eine bessere Auslesbarkeit des RFID-Transponders erreicht.

In einer vorteilhaften Ausführungsform ragt die Antenne dabei an zwei voneinander abgewandten Seiten des Metallgrundkörpers über dessen Kontur hinaus. Auf diese Weise kann eine Wechselwirkung zwischen dem RFID-Transponder und einem Lesegerät beziehungsweise einem von diesem erzeugten hochfrequenten elektromagnetischen Speisefeld bei vorbestimmtem Abstand des Schmuckgegenstandes zum Lesegerät mit relativ hoher Sicherheit erzielt werden, da eine vollständige Abschirmung des Transponders durch den Metallgrundkörper vermieden wird.

Dabei ist es günstig, wenn der Metallgrundkörper eine Durchtrittsausnehmung zur Aufnahme des RFID-Transponders aufweist. Durch diese ist eine relativ unauffällige und stabile Aufnahme des RFID-Transponders möglich.

Vorteilhafterweise ist die Durchtrittsausnehmung dabei benachbart zu einer zusätzlichen Materialausnehmung, wie eine Einschnürung, Eindellung oder sonstige Materialreduzierung des Metallgrundkörpers angeordnet. Auf diese Weise ist es möglich, den Transponder beziehungsweise dessen Antenne möglichst weit über den Metallgrundkörper hinaus ragen lassen zu können.

Vorteilhafterweise ist der RFID-Transponder als passiver Transponder ausgebildet. Hierdurch kann der RFID-Transponder ohne eine notwendige Zugangsmöglichkeit zu einem eigenen Energiespeicher in den Schmuckgegenstand eingebaut werden, wodurch ein leichter und langlebiger Einbau des RFID-Transponders in den Schmuckgegenstand möglich ist und ein geringerer Platzbedarf besteht.

Alternativ hierzu kann der RFID-Transponder auch als batteriebetriebener Transponder ausgebildet werden, beispielsweise um die Reichweite beim Datenaustausch mit einem Lesegerät zu erhöhen.

In einer besonders vorteilhaften Ausführungsform bildet der Metallgrundkörper dabei einen Fingerring und die Anlege-/Befestigungsmittel sind als Fingeraufnahme ausgebildet. Durch diese Ausbildung des Schmuckringes als Fingerring kann der als Identifikationsmittel dienende Schmuckgegenstand besonders unauffällig und dauerhaft getragen und auch problemlos an ein Lesegerät gehalten werden, um die gespeicherten Identifikationsdaten auslesen zu lassen.

Ferner wird die Aufgabe durch ein Identifikationssystem mit wenigstens einem Schmuckgegenstand nach einer der oben genannten Ausführungsformen und einem Lesegerät zum Auslesen von am Schmuckgegenstand gespeicherten Daten gelöst. Dabei ist über das Lesegerät in Abhängigkeit der auslesbaren Daten eine Sicherungseinrichtung aktivierbar. Auf diese Weise kann der Schmuckgegenstand in Wechselwirkung mit einem auf ihn abgestimmten Lesegerät zur Absicherung beziehungsweise personenabhängigen Öffnung von sicherheitsrelevanten Bereichen verwendet werden.

In einer vorteilhaften Ausführungsform ist die Sicherungseinrichtung dabei an einer Schließvorrichtung vorgesehen, wodurch beispielsweise Türen oder Tore in komfortabler Weise durch bloße Annäherung oder Entfernung der den Schmuckgegenstand tragenden Person geöffnet oder geschlossen werden können.

In einer besonders vorteilhaften Ausführungsform ist die Schließvorrichtung dabei in ein Fahrzeug eingebaut, um wenigstens eine von dessen Fahrzeugtüren betätigen zu können, wobei die Fahrzeugtür bei in der Nähe zum Fahrzeug angeordnetem Schmuckgegenstand geöffnet wird, während sie geschlossen wird, wenn sich der Schmuckgegenstand beziehungsweise die diesen tragende Person sich vom Fahrzeug entfernt.

Alternativ hierzu kann die Sicherungseinrichtung auch an einem Computer vorgesehen werden, um diesen beispielsweise für eine Person oder mehrere bestimmte Personen generell zugänglich zu machen, beziehungsweise um personenabhängig bestimmte Bereiche des Computers zugänglich zu machen.

In den Figuren ist eine beispielhafte Ausführungsform der Erfindung dargestellt. Es zeigen:
- Figur 1: eine Seitenansicht eines erfindungsgemäßen Schmuckgegenstandes,
- Figur 2: eine Draufsicht auf den Schmuckgegenstand in Richtung II aus Fig.1,
- Figur 3: einen Schnitt durch den Schmuckgegenstand in Ebene III-III aus Fig 2,
- Figur 4: eine Darstellung eines Identifikationssystems mit dem Gegenstand gemäß Fig. 1 und einer Sicherungseinrichtung einer Fahrzeugtür,
- Figur 5: eine Seitenansicht einer alternativen Ausführungsform des erfindungsgemäßen Schmuckgegenstandes und
- Figur 6: eine Draufsicht auf den alternativen Schmuckgegenstand in Richtung VI aus Fig. 5.

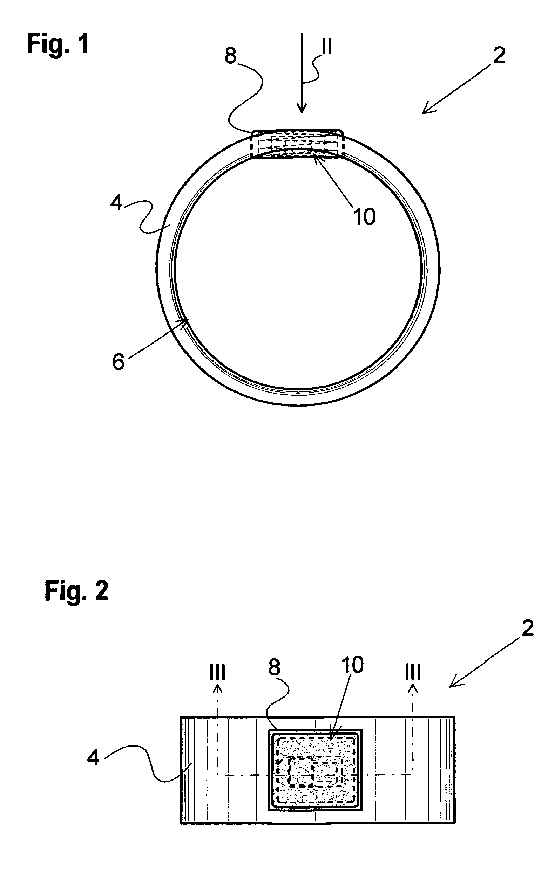

Fig. 1 und 2 zeigen einen Schmuckgegenstand 2 in Form eines Schmuckringes, der einen Metallgrundkörper 4 in Form eines Fingerringes aufweist. Der Metallgrundkörper 4 bildet hierdurch ein Anlege-/Befestigungsmittel 6 in Form einer Fingeraufnahme zur Festlegung an einem zu schmückenden Finger und ist aus einem schmucküblichen Edelmetall, wie beispielsweise aus einer Gold- oder Silberlegierung hergestellt.

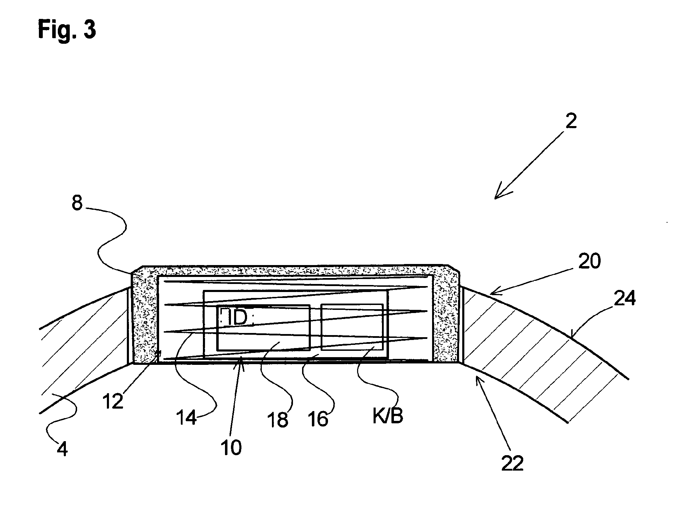

An dem Metallgrundkörper 4 ist ein amorphes Zierelement 8 gehalten, das einerseits als Zierstein beziehungsweise Ziersteinnachbildung des Schmuckgegenstandes 2 und gleichzeitig als Aufnahme für einen RFID-Transponder 10 fungiert. Hierzu weist das amorphe Zierelement 8, wie insbesondere aus Fig. 3 zu entnehmen ist, einen innenseitigen Aufnahmeraum 12 auf, in dem eine spulenförmige Antenne 14 des RFID-Transponders 10 eingeklebt ist, die mit einer Elektronik 16 verbunden ist. Diese weist einen Speicherchip 18 auf, in dem Daten hinterlegt werden können, die wie angedeutet beispielsweise einen Identifikationscode ID umfassen. Das amorphe Zierelement 8 ist dabei vorzugsweise durch einen amorphen Stein gebildet. Alternativ ist auch die Herstellung des amorphen Zierelementes 8 als Ziersteinnachbildung aus einem Kunststoff, einem amorphen Metall oder aus Glas möglich.

Das amorphe Zierelement 8 ist dabei derart an dem Metallgrundkörper 4 gehalten, dass sowohl das Zierelement 8 selbst als auch die Antenne 14 des RFID-Transponders 10 sowohl an einer äußeren Seite 20 als auch an einer inneren Seite 22 des Metallgrundkörpers 4 über dessen Kontur 24 hinaus ragen. Hierzu weist der Metallgrundkörper 4 eine von der äußeren Seite 20 zur inneren Seite 22 durchgehende Durchtrittsausnehmung 26 auf, in der das amorphe Zierelement 8 gefasst ist.

Durch die über die Kontur 24 hinausragende Positionierung der Antenne 14 können trotz der abschirmenden Wirkung des elektrische leitenden Materials des Metallgrundkörpers 4 Funksignale von der Antenne 14 sowohl relativ gut empfangen als auch gesendet werden. Hierdurch ist eine ungestörte Wechselwirkung zwischen der Antenne 14 und einem Lesegerät 28 möglich, mittels dem die auf dem Speicherchip 18 hinterlegten Daten ausgelesen werden können.

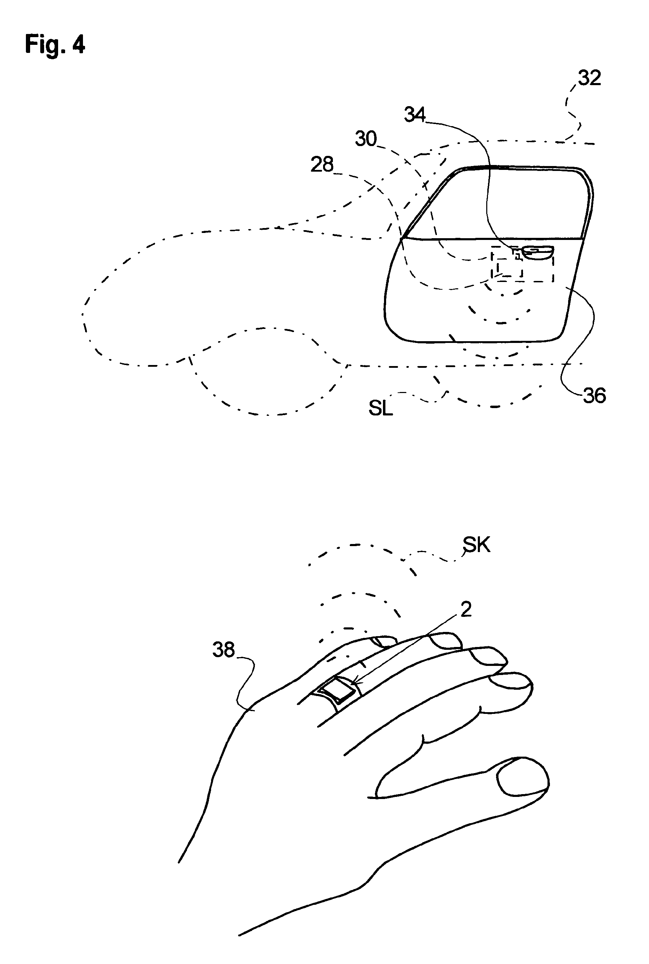

Dabei kann das Lesegerät 28 beispielsweise Teil einer Sicherungseinrichtung 30 eines Fahrzeuges 32 sein, wie in Fig. 4 dargestellt. Mittels dem Lesegerät 28 können dabei die auf dem Speicherchip 18 des Schmuckgegenstandes 2 hinterlegten Daten ausgelesen werden, um in Abhängigkeit des ausgelesenen Identifikationscodes ID eine Schließvorrichtung 34 betätigen zu können, mittels der eine Fahrzeugtür 36 geöffnet oder verschlossen wird.

Der RFID-Transponder 10 kann hierbei als passiver Transponder ohne eigene Stromversorgung ausgebildet sein, der durch ein Funksignal SL, das wie dargestellt vom Lesegerät 28 ausgesandt wird, aktivierbar ist. Der RFID-Transponder weist für diesen Fall, wie in Fig. 3 dargestellt, einen Kondensator K auf, der durch das Funksignal SL aufgeladen wird. Hierdurch ist der RFID-Transponder anschließend in der Lage gemäß Fig. 4 ein Kennungssignal SK zu senden, das den Identifikationscode ID enthält. Dieses Kennungssignal SK kann dann von dem Lesegerät 28 ausgelesen und an die Sicherungseinrichtung 30 weiter gegeben werden, um in Abhängigkeit von diesem die Schließvorrichtung 34 zu betätigen.

Hierbei kann beispielsweise vorgesehen sein, dass die Schließvorrichtung 34 die Fahrzeugtür 36 öffnet, sobald das Lesegerät 28 einen Identifikationscode ID empfängt, der mit einem in der Sicherungseinrichtung 30 hinterlegten Code übereinstimmt. Und dass die Schließvorrichtung 34 die Fahrzeugtür 36 wieder verschließt, sobald ein Träger 40 des Schmuckgegenstandes 2 sich soweit vom Fahrzeug 32 entfernt hat, dass das Lesegerät 28 kein passendes Kennungssignal SK mehr empfängt.

Alternativ zu der hier dargestellten Sicherungseinrichtung 30 kann eine entsprechende Sicherungseinrichtung beispielsweise auch an einem Computer vorgesehen werden, dessen programmtechnischer Zugang in Abhängigkeit von einem passenden Kennungssignal SK erlaubt oder blockiert wird (nicht dargestellt).

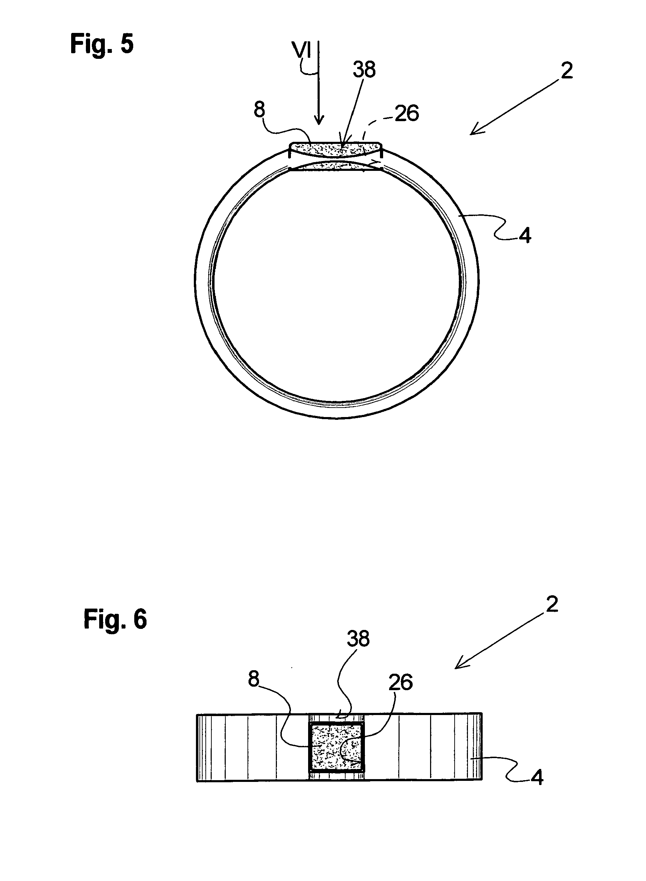

Fig. 5 und 6 zeigen eine weitere Ausführungsform des Schmuckgegenstandes 2, bei der die Durchtrittsausnehmung 26 mit dem darin aufgenommenen amorphen Zierelement 8 zusätzlich neben einer durch eine Einmuldung gebildete Materialausnehmung 38 des Metallgrundkörpers 4 angeordnet ist. Hierdurch kann eine Dämpfung des vom RFID- Transponder 10 beziehungsweise dessen Antenne 14 ausgesandten Kennungssignals Sk weiter reduziert werden.

## Patentansprüche

1. Schmuckgegenstand (2)
mit einem Metallgrundkörper (4), an dem Anlege-/Befestigungsmittel (6) vorgesehen sind,
und an dem ein RFID-Transponder (10) gehalten ist, der einen Speicherchip (18), in dem auslesbare Daten hinterlegt sind, und eine Antenne (14) aufweist, über die Signale (SK; SL) mit einem Lesegerät (28) austauschbar sind,
**dadurch gekennzeichnet, dass** der RFID-Transponder (10) nach außen hin wenigstens teilweise von einem am Metallgrundkörper (4) angeordneten, amorphen Zierelement (8) abgedeckt ist.

2. Schmuckgegenstand nach Anspruch 1, **dadurch gekennzeichnet, dass** das amorphe Zierelement (8) durch einen amorphen Zierstein oder eine Ziersteinnachbildung aus einem amorphen Material gebildet ist.

3. Schmuckgegenstand nach Anspruch 1 oder 2, **dadurch gekennzeichnet, dass** in das Zierelement (8) ein zum Metallgrundkörper (4) hin geöffneter Aufnahmeraum (12) eingelassen ist.

4. Schmuckgegenstand nach einem der Ansprüche 1 bis 3, **dadurch gekennzeichnet, dass** die Antenne (14) über eine Kontur (24) des Metallgrundkörpers (4) hinaus ragt.

5. Schmuckgegenstand nach Anspruch 4, **dadurch gekennzeichnet, dass** die Antenne (14) an zwei voneinander abgewandten Seiten (20, 22) des Metallgrundkörpers (4) über dessen Kontur (24) hinausragt.

6. Schmuckgegenstand nach Anspruch 4 oder 5, **dadurch gekennzeichnet, dass** der Metallgrundkörper (4) eine Durchtrittsausnehmung (26) zur Aufnahme des RFID-Transponders (10) aufweist.

7. Schmuckgegenstand nach Anspruch 6, **dadurch gekennzeichnet, dass** die Durchtrittsausnehmung (26) benachbart zu einer Materialausnehmung (38) des Metallgrundkörpers (4) angeordnet ist.

8. Schmuckgegenstand nach einem der Ansprüche 1 bis 7, **dadurch gekennzeichnet, dass** der RFID-Transponder (10) als passiver Transponder ausgebildet ist.

9. Schmuckgegenstand nach einem der Ansprüche 1 bis 7, **dadurch gekennzeichnet, dass** der RFID-Transponder (10) als batteriebetriebener Transponder ausgebildet ist.

10. Schmuckgegenstand nach einem der Ansprüche 1 bis 9, **dadurch gekennzeichnet, dass** der Metallgrundkörper (4) einen Fingerring bildet und die Anlege-/Befestigungsmittel (6) als Fingeraufnahme ausgebildet sind.

11. Identifikationssystem mit wenigstens einem Schmuckgegenstand nach einem der Ansprüche 1 bis 10 und einem Lesegerät (28) zum Auslesen von am Schmuckgegenstand (2) gespeicherten Daten, **dadurch gekennzeichnet, dass** über das Lesegerät (28) in Abhängigkeit der auslesbaren Daten eine Sicherungseinrichtung (30) aktivierbar ist.

12. Identifikationssystem nach Anspruch 11, **dadurch gekennzeichnet, dass** die Sicherungseinrichtung (30) an einer Schließvorrichtung (34) vorgesehen ist.

13. Identifikationssystem nach Anspruch 12, **dadurch gekennzeichnet, dass** die Schließvorrichtung (34) einer Fahrzeugtür (36) zugeordnet ist.

14. Identifikationssystem nach Anspruch 11, **dadurch gekennzeichnet, dass** die Sicherungseinrichtung (30) an einem Computer vorgesehen ist.
